# EUROPÄISCHE PATENTSCHRIFT

(11) **EP 0 439 024 B1**
(45) Veröffentlichungstag und Bekanntmachung des Hinweises auf die Patenterteilung: **01.09.1993**
(21) Anmeldenummer: 91100261.6
(22) Anmeldetag: 10.01.1991
(51) Int. Cl.: G01B 5/20, G01D 5/02

(54) **Verfahren zum Prüfen der Koaxialitätsabweichung einer Messstelle von einer Bezugsstelle an einem zu prüfenden Gewindeteil, insbesondere Schraube**
Method for testing eccentricity of a testing point from a reference point on a thread to be tested, especially a screw
Méthode pour tester l'excentricité d'une position de mesure à partir d'une position de référence sur une pièce filetée, particulièrement une vis

(30) Priorität: 13.01.1990 DE 4000878
(43) Veröffentlichungstag der Anmeldung: 31.07.1991
(73) Patentinhaber: Kamax-Werke Rudolf Kellermann GmbH & Co. KG, D-37520 Osterode (DE)
(72) Erfinder: Bodschwinna, Horst, Dr.-Ing., W-3053 Haste (DE); Winter, Wolf-Dieter, Dipl.-Ing., W-3000 Hannover 61 (DE)
(74) Vertreter: Rehberg, Elmar, Dipl.-Ing.

(56) Entgegenhaltungen:
- DE-A- 3 333 424
- WERKSTATTSTECHNIK, 77/1987, Springer-Verlag, WINTER, BODSCHWINNA, "Bestimmen der Koaxialitätsabweichung von Gewinde und Schaft an Schrauben für die automatisierte Montage" Seiten 325-328

## Beschreibung

Die Erfindung bezieht sich auf ein Verfahren zum Prüfen der Koaxialitätsabweichung einer Meßstelle von einer Bezugsstelle an einem zu prüfenden Gewindeteil, insbesondere Schraube, in dem ein mit einem Innengewinde versehener Lehrring mit seiner Null-Achse in eine Prüfeinrichtung so eingesetzt wird, daß die Lage seiner Null-Achse an der Prüfeinrichtung bekannt ist, das Gewindeteil mit der als Außengewinde ausgebildeten Bezugsstelle in den Lehrring eingeschraubt wird und an der Meßstelle über den Umfang Meßwerte ermittelt werden, um hieraus auf die Koaxialitätsabweichung der Meßstelle von der Bezugsstelle zu schließen.

Die Erfindung zeigt weiterhin eine Prüfeinrichtung zur Durchführung des Verfahrens mit einer Aufnahme für den Lehrring und einer im Bereich der Meßstelle ansetzbaren Meßeinrichtung. Das zu prüfende Gewindeteil, insbesondere die Schraube, besitzt ein Außengewinde, welches die Bezugsstelle bildet, und weist eine Meßstelle auf, die beispielsweise als Paßzylinder ausgebildet sein kann. Das Außengewinde besitzt eine Achse und der Paßzylinder besitzt eine zweite Achse, die nicht unmittelbar fluchtend zusammenfallen müssen, sondern mehr oder weniger versetzt oder schräg zueinander liegen können. Der Abstand der Achse des Paßzylinders, also der Meßstelle von der Achse der Bezugsstelle ist ein Maß für die Koaxialitätsabweichung. Die Koaxialitätsabweichung ist also die Lageabweichung der Achse der Meßstelle zur Achse der Bezugsstelle, die durch Abknicken des Außengewindes am Schaft des Gewindeteils oder durch Formabweichungen der Schaftachse entsteht. Die vorliegende Erfindung wird für ein Gewindeteil mit Außengewinde beschrieben und definiert. Es versteht sich, daß für Gewindeteile mit Innengewinde die umgekehrten Verhältnisse gelten.

Ein Verfahren und eine Prüfeinrichtung der eingangs beschriebenen Art sind bekannt. Ein mit einem Innengewinde versehener Lehrring wird in eine Prüfeinrichtung eingesetzt. Die Prüfeinrichtung weist als wesentlichen Bestandteil eine drehbar gelagerte Hülse auf. Der Lehrring wird so eingesetzt, daß seine Nullachse mit der Achse der Hülse fluchtet. Das Gewindeteil wird mit seiner Bezugsstelle und dem dort ausgebildeten Außengewinde in das Innengewinde des Lehrrings eingeschraubt. Die Hülse samt dem eingeschraubten Gewindeteil werden in Rotation versetzt und an der Meßstelle wird radial ein Meßtaster angestellt, beispielsweise eine Meßuhr. Es wird hier eher eine Mittigkeitsabweichung oder eine Rundlaufabweichung ermittelt. Die Geometrie an der Meßstelle verfälscht das Meßergebnis. So kann beispielsweise die Formabweichung an der Meßstelle eine Koaxialitätsabweichung vortäuschen, obwohl eine solche nicht vorliegt. Das Spiel zwischen dem Außengewinde der Bezugsstelle und dem Innengewinde des Lehrrings stört bei diesem Meßverfahren erheblich, weil es dazu führt, daß das Gewindeteil während der Rotation und der Messung zu unkontrollierten Bewegungen zwischen Meßstelle und Bezugsstelle führt. Hierbei überlagert sich die vorhandene Reibung zwischen Außengewinde und Innengewinde, die ungleichmäßig überwunden wird, so daß das Gewindeteil gleichsam während der Messung im Lehrring schlackernd unterschiedlich Lagen einnimmt. Diese mehr oder weniger zufällige Einnahme von Relativlagen zwischen Meßstelle und Bezugsstelle verfälscht das Meßergebnis grundlegend. Zusätzlich können sich durch dieses Schlackern noch Schraubbewegungen beim Rundlauf überlagern, indem das Gewindeteil ungewollt während der Messung in den Lehrring weiter eingeschraubt oder - je nach Drehrichtung - aus diesem herausgeschraubt wird. Schließlich ist die Genauigkeit dieses Meßverfahrens auch von der Präzision der Lagerung der drehbaren Hülse, die den Lehrring aufnimmt, abhängig, ebenso von der Genauigkeit, mit der die Null-Achse des Lehrrings gegenüber der Achse der Hülse beim Einspannen des Lehrrings positioniert wird. Das Spiel zwischen dem Außengewinde und dem Innengewinde stört hier grundsätzlich und es wird deshalb angestrebt, dieses Spiel möglichst zu vermeiden, um das Schlackern auszuschalten. Anzustreben ist deshalb ein spielfreies Einschrauben, wodurch dieses Verfahren für eine Produktionsüberwachung von Gewindeteilen an sich nicht in Frage kommt, weil nicht für jedes Gewindeteil ein gesonderter Lehrring angefertigt werden kann, bei dem sich gerade Spielfreiheit hinsichtlich der Gewinde zu dem individuellen Gewindeteil ergibt. Beschädigungen am Außendurchmesser des Außengewindes des Gewindeteils, die bei der praktischen Herstellung nicht vermeidbar sind, wirken sich nachteilig beim Einschrauben des Gewindeteils in den Lehrring aus.

Bei einem weiteren bekannten Prüfgerät findet gleichsam ein in zwei Gewindesegmente geteilter Lehrring Verwendung. Durch radiale Federbelastung des einen Gewindesegments gegenüber dem anderen ist es möglich, die Bezugsstelle des Gewindeteils spielfrei aufzunehmen. Dies ermöglicht ein schnelles Spannen des Gewindeteils im Prüfgerät und eine normgerechte Aufnahme im Flankendurchmesser. Auch hierbei wird beispielsweise eine Meßuhr an der Meßstelle radial angestellt und das Gewindeteil einschließlich seiner Einspannung wird zur Messung gedreht. Die Messungen sind stark abhängig von dem Einspannort. Leichte Gewindebeschädigungen können zu Fehlmessungen führen. Die Vorspannungseinstellung an dem beweglich gelagerten Gewindesegment ist nicht überprüfbar.

Bei einem weiteren Prüfgerät wird das Gewindeteil mit seinem Außengewinde in ein konisches Gewinde an einem Lehrring eingeschraubt, der wiederum auf einer drehbar gelagerten Hülse angeordnet ist. Auch hier erfolgt ein Rundlauf und eine Messung durch Anstellen einer Meßuhr in radialer Richtung an der Meßstelle. Vorteilhaft wird hier Spiel zwischen dem Gewindeteil und dem Lehrring vermieden. Auch die Einschraubtiefe ist hier festgelegt, wenngleich die Bezugsstelle an einem Teil des Außengewindes gebildet wird, welches noch mit den Ungenauigkeiten der Anfasung behaftet ist. Dies stellt zugleich einen entsprechenden Nachteil dar. Bei Beschädigungen der ersten Gewindegänge treten deshalb oft Fehlmessungen auf, indem größere Mittigkeitsabweichungen vorgetäuscht werden.

Ein weiteres bekanntes Prüfgerät baut wiederum auf einer drehbar gelagerten Hülse auf, in welcher eine geteilte Spannzange gelagert ist, die ein spielfreies Einspannen des Gewindeteils mit seiner Bezugsstelle gestattet. Auch hier wieder der Rundlauf gemessen. Nachteilig hieran ist, daß die Messung bei Verhältnissen durchgeführt wird, bei welchen der Flankendurchmesser gerade nicht normgemäß aufgenommen ist. Durch Verkanten beim Spannen können Fehler die Messung überlagern.

Schließlich ist noch ein sogenanntes Dreirollengerät bekannt, bei dem das Gewindeteil mit seinem Außendurchmesser in dem Spalt dreier gegeneinander angestellter Rollen aufgenommen wird. Das Einlegen des Gewindeteils in diese Prüfeinrichtung ist zwar besonders einfach und es können insoweit auch unterschiedliche Normdurchmesser ohne Umrüstung aufgenommen werden. Beschädigungen im Gewinde sind ohne Einfluß. Beschädigungen am Außenumfang des Gewindes wirken sich aus. Die Aufnahmesituation ist nicht normgerecht. Unterschiedliche Meßergebnisse gibt es bei unterschiedlichen Aufnahmen des Gewindeteils, selbst bei konstanter Aufnahmetiefe.

Die fünf beschriebenen Prüfgeräte sind in der Zeitschrift Werkstattstechnik 77 (1987), Seiten 325 bis 328 "Bestimmung der Koaxialitätsabweichung von Gewinde und Schaft an Schrauben für die automatisierte Montage" beschrieben.

Der Erfindung liegt die Aufgabe zugrunde, ein Verfahren und eine Prüfeinrichtung der eingangs beschriebenen Art aufzuzeigen, mit welchen eine reproduzierbare Ermittlung der Koaxialitätsabweichung, und nur dieser, also möglichst unverfälscht von anderen Störgrößen, möglich ist.

Erfindungsgemäß wird dies bei dem Verfahren der eingangs beschriebenen Art dadurch erreicht, daß ein Lehrring Verwendung findet, dessen Innengewinde gegenüber dem Außengewinde des Gewindeteils an der Bezugsstelle Spiel aufweist, daß das Gewindeteil durch einen radialen Kraftangriff gegenüber dem Lehrring gezielt gekippt wird, bis eine Abstützung der Flanken von Außengewinde und Innengewinde erreicht ist, daß bei Beibehaltung dieser Kippung Meßwerte über den Umfang der Meßstelle aufgenommen werden und aus diesen Meßwerten unter Anwendung eines mathematischen Modells die Lage des Schwerpunkts der Meßstelle in diese Kippung ermittelt wird, daß das Gewindeteil in mehreren unterschiedlichen radialen Richtungen nacheinander gekippt und jeweils die Lagen des Schwerpunkts der Meßstelle auf die beschriebene Weise ermittelt werden, und daß aus den Lagen des Schwerpunkts bei den verschiedenen Kippungen durch Anwendung eines mathematischen Modells ein Hauptschwerpunkt errechnet wird, dessen Entfernung von der Null-Achse dann ein Maß für die Koaxialitätsabweichung ist.

Während bei den bisher bekannten Meßverfahren auftretendes Spiel zwischen Innengewinde und Außengewinde immer nachteilig war und das Meßergebnis verfälschte, ist jetzt ein Spiel zwingend notwendige Voraussetzung, um eine Koaxialitätsabweichung messen zu können. Dies hat zugleich den Vorteil, daß während der Messung eine normgerechte Aufnahme im Flankendurchmesser stattfindet, also eine durchaus praxisgerechte, vergleichbare Einschraubsituation wie bei der späteren Anwendung des Gewindeteils in der Montage. Durch einen radialen Kraftangriff mit einer vergleichsweise geringen Kraft, die nur gezielt den Kippvorgang im Gewinde des Lehrrings herbeiführen soll, wird nun das Gewindeteil bei dieser ersten Kippung in eine erste Relativlage gebracht, bis sich die Flanken des Außengewindes und des Innengewindes aneinander abstützen. Das Gewindeteil soll praktisch nur gezielt kippen, nicht jedoch elastisch verbogen werden. Aus diesem Grund kann der radiale Kraftangriff nach Vollendung des Kippvorgangs beendet werden oder auch in noch weiter verminderter Form die Kraft beibehalten bleibt, um sicherzustellen, daß das Gewindeteil während der anschließenden Messung bei der ersten Kippung seine Position nicht verläßt. Es werden nun vorzugsweise gleichzeitig mehrere Meßwerte über den Umfang der Meßstelle aufgenommen, indem mehrere Meßtaster die Lage der Oberfläche der Meßstelle relativ zur in ihrer Lage bekannten Null-Achse aufnehmen. Aus diesen Meßwerten wird die Lage des Schwerpunkts der Meßstelle in dieser Kippung ermittelt, und zwar relativ zu einem Koordinatensystem, in welchem auch die Lage der Null-Achse bekannt ist. Zweckmäßig wird eine Achse des Koordinatensystems in die Null-Achse gelegt. Wenn beispielsweise die Meßstelle ideal kreisrund ist oder angenommen werden kann, wird als mathematisches Modell eine Kreisformel benutzt, aus der der Mittelpunkt des Kreises als Schwerpunkt der Meßstelle in dieser Kippung errechnet wird, so daß dessen Lage zur Null-Achse oder auch zum Koordinatensystem bekannt ist. Es schließen sich nun in mehrfacher Wiederholung weitere Kippungen nacheinander in unterschiedlichen radialen Richtungen zu der Null-Achse an, ohne daß dabei das Gewindeteil in dem Lehrring verdreht oder die Aufnahme ansonsten verändert werden. In jeder einzelnen dieser Kippungen oder Kippstellungen werden jeweils wieder Meßwerte über dem Umfang der Meßstelle aufgenommen und aus diesen Meßwerten unter Anwendung des gleichen mathematischen Modells jeweils die Lage des Schwerpunkts der Meßstelle ermittelt, so daß am Ende der Kippungen und Messungen je nach der Anzahl der Kippungen eine Anzahl Schwerpunkte der Meßstelle bekannt sind. Aus diesen Schwerpunkten läßt sich nun ein Hauptschwerpunkt errechnen, wobei entweder das gleiche mathematische Modell oder ein anderes Anwendung findet. Die Lage des Hauptschwerpunkts zur Null-Achse des Innengewindes des Lehrrings ist dann ein Maß für die Koaxialitätsabweichung.

Das neue Verfahren ist unabhängig von der Geschicklichkeit des Prüfpersonals, weil die Kippung reproduzierbar in ihrem radialen Kraftangriff maschinell herbeigeführt werden kann. Der gesamte Prüfvorgang kann automatisiert werden, wobei beispielsweise auch durch Anschläge eine reproduzierbare Einschraubtiefe festgelegt werden kann, damit die Messungen vergleichbar werden. Das neue Meßverfahren ist frei von Rotationsbewegungen. Es läßt sich vergleichsweise schnell und einfach handhaben. Überraschend ist, daß eine Lehre in Form des Lehrrings zu Meßzwecken benutzt und eingesetzt wird. Eine Lehre dient üblicherweise gerade nicht zu Meßzwecken, sondern erbringt nur eine Aussage, ob die betreffende Funktion oder Eigenschaft gegeben ist oder nicht. Das Verfahren ist schließlich reproduzierbar und kann leicht an unterschiedliche Größen und Längen der Gewindeteile angepaßt werden.

Das Spiel zwischen Innengewinde des Lehrrings und Außengewinde des Gewindeteils an der Bezugsstelle wird mindestens so groß gewählt, daß zulässige Form- und Maßabweichungen des Außengewindes der Bezugsstelle die Kippungen nicht verhindern. Insoweit muß an die Genauigkeit der Ausbildung des Innengewindes des Lehrrings keine besonders hohe Anforderung gestellt werden. Die Anforderungen können durchaus in der Größenordnung gehalten werden, die den Teilen entsprechen, mit denen das Gewindeteil während der Montage in Wirkverbindung tritt. Das Meßverfahren ist unabhängig von der Größe des Spiels; Spiel muß nur grundsätzlich vorhanden sein.

Vorteilhaft ist es weiterhin, wenn das Gewindeteil zwischen zwei aufeinanderfolgenden Kippungen in eine Mittellage zurückgekippt wird, so daß die einzelnen Kippungen mehr oder weniger aus der identischen Mittellage heraus angefahren werden. Dies ist auch mit Rücksicht auf die geringen, radial angreifenden Kräfte zur Erreichung der Relativlage in den einzelnen Kippungen sinnvoll. Damit sollen Ungenauigkeiten der Messung ausgeschaltet werden, die durch Beschädigungen des Außengewindes hervorgerufen sind.

Die Meßwerte über den Umfang der Meßstelle bei jeder Kippung können gemeinsam bzw. gleichzeitig ermittelt werden. Vorteilhaft wird mit etwa senkrechter Achse des Gewindeteils hängend oder stehend gemessen, so daß der Schwerkrafteinfluß auf die Kippungen weitgehend ausgeschaltet ist und insoweit eine Rotation vermieden wird. Die axiale Einschraubtiefe des Gewindeteils in den Lehrring muß festgelegt sein, um zu reproduzierbaren Meßergebnissen zu kommen.

Die Prüfeinrichtung zur Durchführung des Verfahrens weist eine Aufnahme für den Lehrring und eine im Bereich der Meßstelle ansetzbare Meßeinrichtung auf und kennzeichnet sich erfindungsgemäß dadurch, daß mindestens eine steuerbare Kraftquelle zur Durchführung der Kippungen vorgesehen ist. Diese steuerbare Kraftquelle kann insbesondere aus einem kleinen, pneumatisch ansprechbaren Zylinder bestehen, dessen Druckluftzufuhr über ein Steuerventil steuerbar ist. Zweckmäßig sollte es sich um einen doppelt wirkenden Zylinder handeln, um die nötige Bewegungsfreiheit bei den verschiedenen Kippungen herzustellen.

Die Null-Achse des Lehrrings kann in senkrechter Richtung, und zwar stehend oder hängend, angeordnet werden, so daß der Schwerkrafteinfluß besonders gering ist. Prinzipiell könnte aber durchaus auch eine waagerechte oder eine schräge Lage der Null-Achse des Lehrrings Anwendung finden, wobei dann der Schwerkrafteinfluß bei dem radialen Kraftangriff zum Erreichen der verschiedenen Kipp-Positionen entsprechend berücksichtigt werden müßte. Insoweit wäre dann zumindest eine schrittweise Rotation wiederum erforderlich, die vorteilhaft bei senkrechter Anordnung der Null-Achse des Lehrrings entfällt.

Es können mehrere steuerbare Kraftquellen und Meßeinrichtungen über den Umfang der Null-Achse verteilt angeordnet sein. Gute Ergebnisse lassen sich bereits dann erreichen, wenn vier steuerbare Kraftquellen um jeweils 90° über den Umfang verteilt angeordnet sind und eine gleiche Anzahl Meßeinrichtungen in ähnlicher Verteilung vorgesehen sind. Durch Beaufschlagung von zwei benachbarten steuerbaren Kraftquellen lassen sich insoweit schon 8 Kippungen erzielen. Die Kraftquellen sind in axialer Richtung zweckmäßig zwischen der Bezugsstelle und der Meßstelle an dem Gewindeteil angreifend vorgesehen. Auch die Meßeinrichtungen können mit doppelt wirkenden, pneumatischen Zylindern versehen sein, um die Meßeinrichtungen abzuheben bzw. an die Meßstelle anzustellen. Die Anordnung mehrerer Meßeinrichtungen gestattet die nahezu gleichzeitige Aufnahme der Meßwerte, die zweckmäßig über einen Rechner angesteuert, abgefragt und gespeichert sowie verarbeitet werden. Insoweit ist ein Rechner zur Steuerung, Erfassung und Auswertung der Meßwerte vorgesehen.

Das Innengewinde des Lehrrings kann im Gewindegrund freigearbeitet sein. Damit wird eine Anlage des Außengewindes an dem Innengewinde bei jeder Kippung im Bereich des Flankendurchmessers angestrebt, also eines Durchmessers, der vergleichsweise geschützt im Mittelbereich der radialen Erstreckung des Außengewindes vorgesehen ist. Eine Beschädigung des Außengewindes des Gewindeteils während der Herstellung geschieht vorzugsweise am Außendurchmesser des Außengewindes. Wenn der Lehrring dort freigearbeitet ist, können sich solche Beschädigungen nicht nachteilig auf das Meßergebnis auswirken.

Zur Einhaltung einer definierten Einschraubtiefe des Gewindeteils im Lehrring kann ein Meßtaster, ein Anschlag o. dgl. vorgesehen sein. Im allgemeinen wird der Lehrring eine bestimmte zugeordnete Höhe aufweisen, die kleiner ist als die Länge des Außengewindes des Gewindeteils. Da das Gewindeteil selbst eine krumme Achse aufweisen kann, wird auf diese Art und Weise reproduzierbar die Bezugsstelle festgelegt.

Das Verfahren und die Prüfeinrichtung werden anhand der Zeichnungen weiter beschrieben und erläutert. Es zeigen:
- Figur 1: den Lehrring mit seiner Null-Achse,
- Figur 2: die grundsätzliche Anordnung und Relativlage eines Gewindeteils während einer Kippung,
- Figur 3: eine schematisierte Seitenansicht, teilweise geschnitten, der Prüfeinrichtung und
- Figur 4: ein Blockschaltbild der Prüfeinrichtung sowie weiterer angeschlossener Teile.

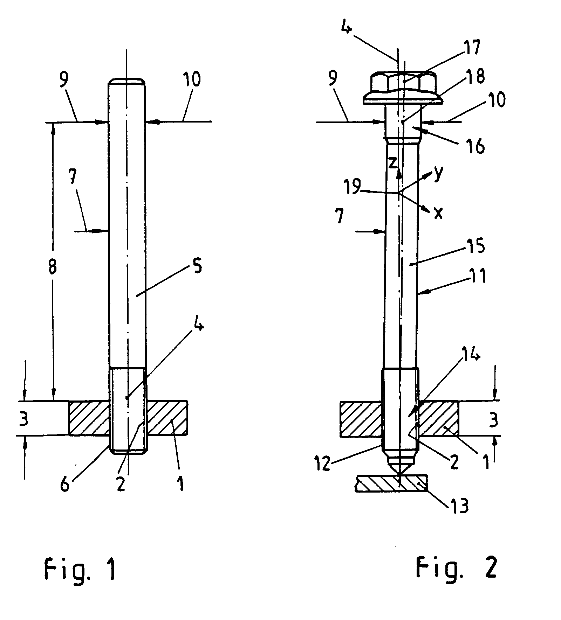

In Figur 1 ist ein Lehrring 1 dargestellt, der ein Innengewinde 2 aufweist. Der Lehrring 1 besitzt eine Höhe 3. Das Innengewinde 2 besitzt eine Null-Achse 4, die bei der Messung dann zweckmäßig mit der Z-Achse eines üblichen Koordinatensystems zusammenfällt. Zu Kalibrierzwecken der Prüfeinrichtung kann ein Lehrdorn 5 mit seinem Außengewinde 6 in den Lehrring 1 eingeschraubt werden. Das Außengewinde 6 ist so ausgebildet, daß es spielfrei einschraubbar ist. Der Lehrdorn 5 ist ansonsten geschliffen, so daß seine Achse zugleich mit der Null-Achse 4 des Innengewindes 2 zusammenfällt bzw. diese Null-Achse 4 wiedergibt. Dieser Lehrdorn 5 kann zu Kalibrierzwecken in der Vorrichtung benutzt werden. Wenn dafür gesorgt wird, daß der Lehrring 1 positionsgenau mit bekannter Lage seiner Null-Achse 4 relativ zu dem Koordinatensystem der Prüfeinrichtung einsetzbar ist, kann auf die Anwendung des Lehrdorns 5 natürlich auch verzichtet werden.

Kippungen an dem Lehrdorn 5 durch radialen Kraftangriff gemäß Pfeil 7 können infolge des spielfreien Einschraubens des Lehrdorns 5 nicht dazu führen, daß der Lehrdorn 5 gegenüber dem Lehrring 1 kippt. Messungen in Meßhöhe 8 gemäß den Pfeilen 9 und 10 (zweckmäßig an mindestens vier Stellen des Umfangs) erbringen keine Abweichung der Achse des Lehrdorns 5 von der Nullachse 4. Statt des spielfrei einschraubbaren Lehrdorns 5 kann zu Kalibrierzwecken auch ein Lehrdorn 5 mit geringem Spiel zwischen seinem Außengewinde 6 und dem Innengewinde 2 des Lehrrings 1 benutzt werden.

Figur 2 zeigt nun schematisch ein Gewindeteil 11 in Form einer Bundschraube, die ein Außengewinde 12 aufweist, mit welchem sie gegen einen Anschlag 13 mit insoweit reproduzierbarer Einschraubtiefe in das Innengewinde 2 des Lehrrings 1 eingeschraubt ist. Zwischen dem Außengewinde 12 und dem Innengewinde 2 ist Spiel vorhanden. Das Außengewinde 12 bildet mit seinem Teil, der von dem Innengewinde 2 des Lehrrings 1 in der Einschraublage umschlossen wird, eine Bezugsstelle 14. Das Gewindeteil 11 weist ansonsten einen Schaft 15 auf, in dessen Bereich der radiale Kraftangriff gemäß Pfeil 7 erfolgt. Das Gewindeteil 11 bildet mit einem Paßzylinder eine Meßstelle 16, also eine Stelle, an der am Gewindeteil 11 gemessen wird, und zwar gemäß den Pfeilen 9 und 10 an mehreren Stellen über den Umfang in zweckmäßig gleichmäßiger Verteilung. Die Meßstelle 16 weist eine Achse 17 auf, wobei die Achse 17 mehr oder weniger weit von der Null-Achse 4 abweicht. Diese Abweichung bzw. die Entfernung dieser beiden Achsen 4 und 17 an der Meßstelle 16 ist ein Maß für die Koaxialitätsabweichung (wenn sich die Achse des Außengewindes 12 an der Bezugsstelle 14 koaxial zur Null-Achse 4 des Lehrrings 1 befindet, also das Gewindeteil 11 in einer Art Mittelstellung ist). Wenn das Gewindeteil 11 gemäß Figur 2 in einer Kippstellung ist, gibt die Achse 17 die Lage des Schwerpunkts 18 in Bezug auf ein Koordinatensystem 19 mit seinen X-, Y- und Z-Achsen wieder, welches zur Verdeutlichung beispielhaft in Figur 2 eingezeichnet ist. Man erkennt, daß die Z-Achse mit der Null-Achse 4 zusammenfällt.

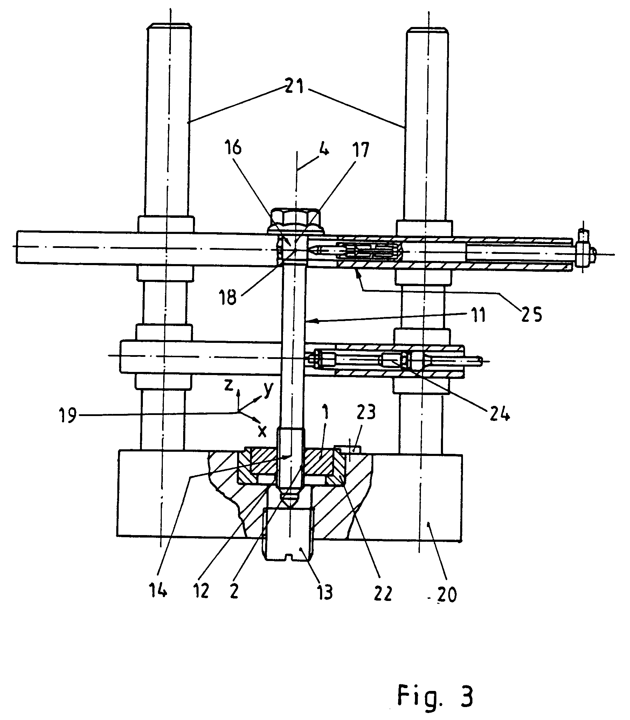

Figur 3 verdeutlicht weitere Elemente der Prüfeinrichtung. Auf einem ortsfest gelagerten Meßtisch 20 sind in vertikaler Ausrichtung mindestens drei Säulen 21 zur Festlegung waagerechter Ebenen vorgesehen, von denen aus Übersichtlichkeitsgründen nur zwei Säulen 21 dargestellt sind. In dem Meßtisch 20 ist der Lehrring 1 mit Hilfe eines Spannelements 22 lage- und positionsgenau aufgenommen und durch ein Sicherungselement 23 gesichert. Diese Aufnahme geschieht in der Weise, daß die Null-Achse 4 des Spannelements 1 gegenüber dem Koordinatensystem 19, welches hier aus Übersichtlichkeitsgründen außerhalb der Null-Achse 4 gezeichnet ist, bekannt ist. Ein Gewindeteil 11, dessen Koaxialitätsabweichung gemessen werden soll, ist mit seinem Außengewinde 12 unter Spiel gegen den im Meßtisch 20 eingeschraubten und damit die Einschraubtiefe festlegenden Anschlag 13 eingeschraubt. Die Achse 17 der Meßstelle 16 des Gewindeteils 11 erstreckt sich damit ebenfalls im wesentlichen senkrecht.

Für die gezielte Herbeiführung der einzelnen Kippungen durch radialen Kraftangriff im Bereich des Schafts 15 des Gewindeteils 11, wie dies durch den Pfeil 7 gemäß Figur 2 verdeutlicht wurde, sind über den Umfang des Gewindeteils 11 verteilt mehrere steuerbare Kraftquellen 24, z. B. in Form eines doppelt wirkenden Pneumatikzylinders, vorgesehen, von denen der Einfachheit halber nur eine Kraftquelle 24 dargestellt ist. Es können beispielsweise jeweils um 90° über den Umfang der Null-Achse 4 verteilt vier Kraftquellen 24 vorgesehen sein, die jeweils einzeln betätigbar sind, so daß insoweit vier unterschiedliche radiale Kippungen entstehen. Wenn dann noch jeweils zwei benachbarte Kraftquellen 24 zugleich betätigt werden, sind vier weitere, zu den ersten vier Kippungen unterschiedliche Kippungen erzielbar, also bereits insgesamt 8 Kippungen des Gewindeteils 11 gegenüber dem feststehenden Lehrring 1.

Bei jeder Kippung wird im Bereich der Meßstelle 16 des Gewindeteils 11 gemessen. Zu diesem Zweck sind über den Umfang der Null-Achse 4 verteilt mehrere Meßeinrichtungen 25 vorgesehen. Die Meßeinrichtungen 25 können aus vier einzelnen, jeweils um 90° versetzt angeordneten induktiven Feintastern bestehen, die mit Hilfe von doppelt wirkenden pneumatischen Zylindern gegen die Meßstelle 16 angestellt bzw. zum Wechsel des Gewindeteils 11 abgehoben, also zurückgefahren werden können. Es wäre natürlich auch denkbar, nur eine einzige Meßeinrichtung 25 vorzusehen und diese bei jeder einzelnen Kippung in der horizontalen Ebene um die Null-Achse 4 herum zu verfahren, um den Umfang der Meßstelle 16 bzw. deren relative Lage zu dem Koordinatensystem 19 abzutasten. Eine solche Rotation der Meßeinrichtung 25 kann dann vermieden werden, wenn eine entsprechende Anzahl von Meßeinrichtungen 25 über den Umfang verteilt angeordnet wird.

Wie ersichtlich, können sowohl die Kraftquellen 24 wie auch die Meßeinrichtungen 25 unabhängig voneinander in der Höhe an den Säulen 21 ver- und eingestellt werden, um die relative Lage zwischen Bezugsstelle und Meßstelle 16 sowie die Lage des radialen Kraftangriffs dazu festzulegen und/oder auf die abweichenden Längen der Gewindeteile 11 unterschiedlicher Längen abzustimmen. Ähnliches gilt für die Prüfung von Gewindeteilen mit unterschiedlichen Durchmessern, wobei es sich versteht, daß zu jedem Normdurchmesser ein gesonderter Lehrring 1 erforderlich ist.

Die Ermittlung der Koaxialitätsabweichung der Meßstelle 16 von der Bezugsstelle 14 an dem Gewindeteil 11 geschieht nun in folgender Weise:
Nachdem das Gewindeteil 11 mit reproduzierbarer Einschraubtiefe gegen den Anschlag 13 eingeschraubt ist, wird durch einen einseitigen radialen Kraftangriff über eine der Kraftquellen 24 das Gewindeteil 11 aus einer Mittellage in eine erste Kippung überführt, bis sich die Flanken des Außengewindes 12 an dem Flanken des Innengewindes 2 des Lehrrings 1 abstützen. Die Kraftquelle 24 wird ausgeschaltet und es werden anschließend mit den Meßeinrichtungen 25 Meßwerte über den Umfang der Meßstelle 16 aufgenommen, beispielsweise vier oder auch acht Meßwerte. Aus diesen Meßwerten wird unter Anwendung eines mathematischen Modells die Lage des Schwerpunkts 18 der Meßstelle 16 in dieser ersten Kippung ermittelt. Anschließend erfolgt durch Betätigung einer anderen Krafquelle 24 das Zurückkippen des Gewindeteils 11 in eine Mittellage. Aus dieser Mittellage wird durch Betätigung einer weiteren anderen Kraftquelle 24 auf dem Umfang eine zweite Kippung herbeigeführt, wobei bei dieser zweiten Kippung genau die Verfahrensschritte nochmals durchgeführt werden, die bei der ersten Kippung bereits beschrieben wurden. Auch hieraus ergibt sich dann eine zweite Lage des Schwerpunkts 18 der Meßstelle 14. Dies wird nun wiederholt, bis die erforderliche Anzahl von Kippungen über den Umfang durchgeführt sind und eine entsprechend den Kippungen sich ergebende Anzahl von Schwerpunkten festlegen. Aus diesen Schwerpunkten wird unter Anwendung eines mathematischen Modells ein Hauptschwerpunkt errechnet, dessen Entfernung von der Nullachse 4 im Koordinatensystem 19 dann ein Maß für die Koaxialitätsabweichung ist.

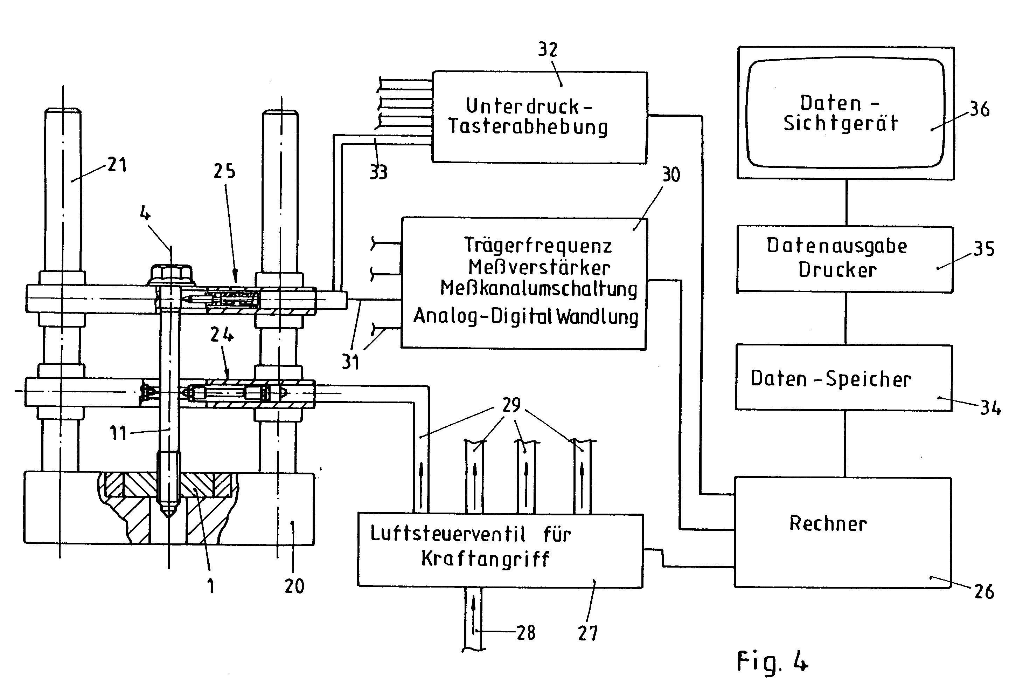

Figur 4 zeigt anhand eines Blockschaltbilds weitere Bestandteile der Prüfeinrichtung. Es ist ein Rechner 26 vorgesehen, der einerseits mit einem Luftsteuerventil 27 für den Kraftangriff verbunden ist. Zu dem Luftsteuerventil 27 führt eine Leitung 28 von einer hier nicht dargestellten Druckluftquelle. Leitungen 29 führen zu den einzelnen Kraftquellen 24, die über den radialen Umfang der Null-Achse 4 verteilt angeordnet sind. Der Rechner 26 ist weiterhin mit einem Trägerfrequenzmeßverstärker 30, einer Meßkanalumschaltung und einer Analog-Digitalwandung verbunden. Einzelne Leitungen 31 führen von dort zu den einzelnen Meßeinrichtungen 25. Mit dem Rechner 26 ist weiterhin eine Steuereinheit 32 verbunden, die der Abhebung der Meßeinrichtungen 25 dient. Entsprechende Leitungen 33 führen von der Steuereinheit 32 zu jeder Meßeinrichtung 25 auf dem Umfang der Meßstelle 16. Mit dem Rechner 26 ist schließlich noch ein Datenspeicher 34, ein Drucker 35 und ein Sichtgerät 36 verbunden. Der Rechner 26 übernimmt menügesteuert die Ansteuerung und Auswertung der Meßwerte nach einem vorgegebenen Programm. Er kann das Meßergebnis grafisch auf dem Sichtgerät 36 darstellen. Die Meßwerte und die Meßergebnisse können auf dem Drucker 35 ausgedruckt sowie im Datenspeicher 34 gespeichert werden. Bei der Prüfung der Koaxialitätsabweichung kann auch der Ist-Durchmesser der Meßstelle und das Gewindespiel bestimmt werden, um diese Meßergebnisse zur Beurteilung der Montagefähigkeit des Gewindeteils und damit für eine Toleranzerweiterung der Koaxialitätsabweichung verwenden zu können.

## Patentansprüche

1. Verfahren zum Prüfen der Koaxialitätsabweichung einer Meßstelle von einer Bezugsstelle an einem zu prüfenden Gewindeteil, insbesondere Schrauben, in dem ein mit einem Innengewinde versehener Lehrring mit seiner Null-Achse in eine Prüfeinrichtung so eingesetzt wird, daß die Lage seiner Null-Achse an der Prüfeinrichtung bekannt ist, das Gewindeteil mit der als Außengewinde ausgebildeten Bezugsstelle in den Lehrring eingeschraubt wird und an der Meßstelle über den Umfang Meßwerte ermittelt werden, um hieraus auf die Koaxialitätsabweichung der Meßstelle von der Bezugsstelle zu schließen, dadurch gekennzeichnet, daß ein Lehrring (1) Verwendung findet, dessen Innengewinde (2) gegenüber dem Außengewinde (12) des Gewindeteils (11) an der Bezugsstelle (14) Spiel aufweist, daß das Gewindeteil (11) durch einen radialen Kraftangriff gegenüber dem Lehrring (1) gezielt gekippt wird, bis eine Abstützung der Flanken von Außengewinde (12) und Innengewinde (2) erreicht ist, daß bei Beibehaltung dieser Kippung Meßwerte über den Umfang der Meßstelle (16) aufgenommen werden und aus diesen Meßwerten unter Anwendung eines mathematischen Modells die Lage des Schwerpunkts (18) der Meßstelle (16) in dieser Kippung ermittelt wird, daß das Gewindeteil (11) in mehreren unterschiedlichen radialen Richtungen nacheinander gekippt und jeweils die Lagen des Schwerpunkts (18) der Meßstelle (16) auf die beschriebene Weise ermittelt werden, und daß aus den Lagen des Schwerpunkts (18) bei den verschiedenen Kippungen durch Anwendung eines mathematischen Modells ein Hauptschwerpunkt errechnet wird, dessen Entfernung von der Null-Achse (4) dann ein Maß für die Koaxialitätsabweichung ist.

2. Verfahren nach Anspruch 1, dadurch gekennzeichnet, daß das Spiel zwischen Innengewinde (2) des Lehrrings (1) und Außengewinde (12) des Gewindeteils (11) an der Bezugsstelle (14) mindestens so groß gewählt wird, daß zulässige Form- und Maßabweichungen des Außengewindes (12) der Bezugsstelle (14) die Kippungen nicht verhindern.

3. Verfahren nach Anspruch 1, dadurch gekennzeichnet, daß das Gewindeteil (11) zwischen zwei aufeinanderfolgenden Kippungen in eine Mittellage zurückgekippt wird.

4. Verfahren nach Anspruch 1, dadurch gekennzeichnet, daß die Meßwerte über den Umfang der Meßstelle (16) bei jeder Kippung gemeinsam bzw. gleichzeitig ermittelt werden.

5. Prüfeinrichtung zur Durchführung des Verfahrens nach Anspruch 1, mit einer Aufnahme für den Lehrring und einer im Bereich der Meßstelle ansetzbaren Meßeinrichtung, dadurch gekennzeichnet, daß mindestens eine steuerbare Kraftquelle (24) zur Durchführung der Kippungen vorgesehen ist.

6. Prüfeinrichtung nach Anspruch 5, dadurch gekennzeichnet, daß die Null-Achse (4) des Lehrrings (1) in senkrechter Richtung angeordnet ist.

7. Prüfeinrichtung nach Anspruch 5 oder 6, dadurch gekennzeichnet, daß mehrere steuerbare Kraftquellen (24) und mehrere Meßeinrichtungen (25) über den Umfang der Null-Achse (4) verteilt angeordnet sind.

8. Prüfeinrichtung nach Anspruch 5 bis 7, dadurch gekennzeichnet, daß ein Rechner (26) zur Steuerung, Erfassung und Auswertung der Meßwerte vorgesehen ist.

9. Prüfeinrichtung nach Anspruch 5 bis 8, dadurch gekennzeichnet, daß das Innengewinde (2) des Lehrrings (1) im Gewindegrund freigearbeitet ist.

10. Prüfeinrichtung nach Anspruch 5 bis 9, dadurch gekennzeichnet, daß zur Einhaltung einer definierten Einschraubtiefe des Gewindeteils (11) im Lehrring (1) ein Meßtaster, Anschlag (13) o. dgl. vorgesehen ist.

## Claims

1. Process for testing the coaxiality deviation of a measuring point from a reference point on a threaded part to be tested, in particular screws, in which a ring gauge provided with an internal thread is inserted by its neutral axis into a test device such that the position of its neutral axis on the test device is known, the threaded part having the reference point configured as an external thread is screwed into the ring gauge and, at the measuring point, measured values are determined over the periphery, in order to conclude therefrom the coaxiality deviation of the measuring point from the reference point, characterised in that a ring gauge (1) is used, the internal thread (2) of which exhibits, at the reference point (14), play in relation to the external thread (12) of the threaded part (11), in that the threaded part (11) is purposefully tilted in relation to the ring gauge (1) by a radial application of force until a supporting of the flanks of the external thread (12) and internal thread (2) is obtained, in that, as this tilt is maintained, measured values are recorded over the periphery of the measuring point (16) and from these measured values the position of the centre of gravity (18) of the measuring point (16) in this tilt is determined by the application of a mathematical model, in that the threaded part (11) is tilted successively in a plurality of different radial directions and the positions of the centre of gravity (18) of the measuring point (16) are respectively determined in the manner described, and in that from the positions of the centre of gravity (18) under the various tilts, a principal centre of gravity is calculated by the application of a mathematical model, the distance of this principal centre of gravity from the neutral axis (4) then being a measure of the coaxiality deviation.

2. Process according to Claim 1, characterised in that the play between the internal thread (2) of the ring gauge (1) and the external thread (12) of the threaded part (11) at the reference point (14) is chosen to be at least of such a size that tolerable formal and dimensional deviations of the external thread (12) of the reference point (14) do not hinder the tilts.

3. Process according to Claim 1, characterised in that, between two successive tilts, the threaded part (11) is tilted back into a central position.

4. Process according to Claim 1, characterised in that the measured values over the periphery of the measuring point (16) under each tilt are determined jointly or simultaneously.

5. Test device for the realisation of the process according to Claim 1, having a receiving fixture for the ring gauge and a measuring device which can be attached in the region of the measuring point, characterised in that at least one controllable energy source (24) is provided for the realisation of the tilts.

6. Test device according to Claim 5, characterised in that the neutral axis (4) of the ring gauge (1) is disposed in the vertical direction.

7. Test device according to Claim 5 or 6, characterised in that a plurality of controllable energy sources (24) and a plurality of measuring devices (25) are disposed scattered over the periphery of the neutral axis (4).

8. Test device according to Claims 5 to 7, characterised in that a computer (26) for the controlling, acquisition and analysis of the measured values is provided.

9. Test device according to Claims 5 to 8, characterised in that the internal thread (2) of the ring gauge (1) is undercut in the floor of the thread.

10. Test device according to Claims 5 to 9, characterised in that, in order to adhere to a defined screw-in depth for the threaded part (11) in the ring gauge (1), a measuring sensor, a stop (13) or the like is provided.

## Revendications

1. Méthode pour tester l'excentricité d'une position de mesure à partir d'une position de référence sur une pièce filetée à contrôler, en particulier une vis, dans laquelle une bague de calibrage munie d'un filetage interne est montée dans un dispositif de test avec son axe de zéro disposé de telle sorte que la position de son axe de zéro dans le dispositif de test soit connue, tandis que la pièce filetée avec la position de référence sous la forme d'un filetage externe est vissée dans la bague de calibrage et que des valeurs de mesure sont relevées sur la position de mesure sur la périphérie, pour en déduire l'excentricité de la position de mesure par rapport à la position de référence,
**caractérisée** en ce qu'on utilise une bague de calibrage (1) dont le filetage interne (2) présente du jeu par rapport au filetage externe (12) de la pièce filetée (11) sur la position de référence (14), en ce que la pièce filetée (11) est délibérément basculée par rapport à la bague de calibrage (1) par application d'une force radiale jusqu'à ce que soit obtenu un appui des flancs du filetage externe (12) et du filetage interne (2), en ce que, tout en maintenant ce basculement, des valeurs de mesure sont relevées sur le pourtour de la position de mesure (16) et d'après ces valeurs de mesure, on détermine au moyen d'un modèle mathématique la position du centre de gravité (18) de la position de mesure (16) dans cet état basculé, en ce que la pièce filetée (11) est basculée successivement dans plusieurs directions radiales différentes en déterminant chaque fois les positions du centre de gravité (18) de la position de mesure (16), de la manière décrite, et en ce qu'on calcule à partir des positions du centre de gravité (18) lors des divers basculements, en utilisant un modèle mathématique, un centre de gravité principal dont la distance par rapport à l'axe de zéro (4) est alors une mesure de l'excentricité.

2. Méthode selon la revendication 1, caractérisée en ce que le jeu entre le filetage interne (2) de la bague de calibrage (1) et le filetage externe (12) de la pièce filetée (11) à la position de référence (14) est choisi d'une grandeur au moins telle que les écarts admissibles dans la forme et les dimensions du filetage externe (12) de la position de référence (14) n'entravent pas les basculements.

3. Méthode selon la revendication 1, caractérisée en ce que la pièce filetée (11) est rappelée en une position médiane entre deux basculements successifs.

4. Méthode selon la revendication 1, caractérisée en ce que les valeurs de mesure sont relevées ensemble et simultanément sur le pourtour de la position de mesure (16) lors de chaque basculement.

5. Dispositif de test pour la mise en oeuvre de la méthode selon la revendication 1, avec une monture pour la bague de calibrage et un dispositif de mesure pouvant être placé dans la zone de la position de mesure, **caractérisé** en ce qu'il est prévu au moins une source de force (24) commandée pour exécuter les basculements.

6. Dispositif de test selon la revendication 5, caractérisé en ce que l'axe de zéro (4) de la bague de calibrage (1) est disposé en sens vertical.

7. Dispositif de test selon la revendication 5 ou 6, caractérisé en ce que plusieurs sources de force (24) commandées et plusieurs dispositifs de mesure (25) sont répartis sur le pourtour de l'axe de zéro (4).

8. Dispositif de test selon les revendications 5 à 7, caractérisé en ce qu'il est prévu un ordinateur (26) pour commander, pour relever et exploiter les valeurs de mesure.

9. Dispositif de test selon les revendication 5 à 8, caractérisé en ce que le filetage interne (2) de la bague de calibrage (1) est dépouillé à la base du filetage.

10. Dispositif de test selon les revendications 5 à 9, caractérisé en ce que, pour respecter une profondeur de vissage bien définie de la pièce filetée (11) dans la bague de calibrage (11), on prévoit un palpeur de mesure, une butée (13), ou autre.
